# FASCICULE DE BREVET EUROPEEN

(11) **EP 3 405 705 B1**
(45) Date de publication et mention de la délivrance du brevet: **02.03.2022**
(21) Numéro de dépôt: 17702420.5
(22) Date de dépôt: 04.01.2017
(51) Int. Cl.: F16J 15/3268, B25B 27/00, F16H 57/029

(54) **DISPOSITIF DE PROTECTION AMOVIBLE DE JOINT DE TRANSMISSION**
ENTFERNBARE SCHUTZVORRICHTUNG EINER GETRIEBEDICHTUNG
REMOVABLE PROTECTION DEVICE OF A TRANSMISSION SEAL

(30) Priorité: 21.01.2016 FR 1650485
(43) Date de publication de la demande: 28.11.2018
(73) Titulaire: Renault s.a.s, 92100 Boulogne Billancourt (FR)
(72) Inventeur: MULLER, Bruno, 78150 Le Chesnay (FR)
(74) Mandataire: Renault Group
(86) Numéro de dépôt international: PCT/FR2017/050007
(87) Numéro de publication internationale: WO 2017/125658

(56) Documents cités:
- EP-A1- 1 240 980
- FR-A1- 2 974 056
- US-A- 4 218 813
- US-A- 4 815 884

## Description

La présente invention se rapporte à l'accouplement des arbres de transmission sur les différentiels de véhicule automobile.

Plus précisément, elle a pour objet un procédé de montage d'un arbre de transmission, avec un dispositif de protection amovible de joint de transmission assurant l'étanchéité entre un carter de différentiel et 1' arbre de transmission s'emmanchant au montage dans celui-ci, comprenant une couronne de protection cylindrique fendue longitudinalement qui est introduite sous le joint pour le protéger lors de l'emmanchement de l'arbre, un rebord d'appui sur le carter, raccordé à la couronne et présentant une ouverture radiale faisant suite à la fente de la couronne, et une poignée d'arrachement accrochée au rebord d'appui.

Les boîtes de vitesses rencontrent fréquemment des fuites d'huile au niveau de leurs sorties de différentiel. Lors de l'assemblage des véhicules en usine de montage de carrosserie, il existe en effet un risque important de dégradation du joint de transmission, au moment du montage de la transmission par les opérateurs, qui peut avoir les origines suivantes :
- une attaque du joint par les cannelures de la transmission,
- un mauvais guidage de la transmission lors de sa mise en position, ou encore
- les chocs pouvant impacter la position du joint, et le voiler.

Par la publication FR 2974056, on connaît un outil de protection pour le montage des transmissions. Cet outil constitue un dispositif de protection amovible pour joint d'étanchéité d'entrée de carter de différentiel, ou joint de transmission. Il se présente sous la forme d'une couronne circulaire, qui recouvre intérieurement le joint à protéger.

La couronne est reliée à une poignée de tirage permettant l'arrachement du dispositif après le montage de l'arbre. L'arrachement du dispositif est facilité par la présence d'une zone de faiblesse ou d'une fente sur la couronne circulaire.

Le montage des transmissions en présence d'un tel protecteur, s'effectue en deux phases : approche de la transmission avec passage complet de ses cannelures dans le protecteur, retrait du protecteur, puis mise en place complète de la transmission. Aucune information n'est donnée au monteur, sur le fait que les cannelures sont bien passées sous le joint, et qu'il peut enlever le protecteur. S'il l'enlève trop tôt, le joint peut être détérioré lors du passage de l'arbre. Si au contraire il va trop loin dans la phase d'approche de la transmission, le protecteur est bloqué en étau entre la boite de vitesse et la transmission. Il faut donc la ressortir partiellement, pour débloquer, et enlever, le protecteur. Cette opération entraîne une perte de temps lors du montage, et risque également de détériorer le joint.

Le document FR2974056A1 propose un dispositif de protection comportant une butée pour arrêter l'emmanchement d'un arbre dans une position de référence, mais il ne comporte pas de poignée d'arrachement.

Le document EP1240980A1 propose un dispositif de protection amovible comportant une couronne de protection à laquelle est associée une poignée d'arrachement.

La présente invention a pour but d'alerter l'opérateur sur le moment opportun pour retirer le protecteur. Dans ce but elle propose un procédé de montage d'un arbre de transmission s'emmanchant au montage dans un carter de différentiel avec un dispositif de protection d'un joint de transmission assurant l'étanchéité entre le carter de différentiel et l'arbre de transmission, selon la revendication 1.

De préférence, la position de référence est atteinte lorsque des cannelures (4a) de l'arbre de transmission ont dépassé le joint de transmission (3).

La présente invention sera mieux comprise à la lecture de la description suivante de deux modes de réalisation non limitatifs de celle-ci, en se reportant aux dessins annexés sur lesquels :
- la figure 1 est une section partielle de différentiel avec le dispositif de protection,
- la figure 2 est vue d'ensemble du dispositif proposé, et
- les figures 3A à 3D illustrent son retrait.

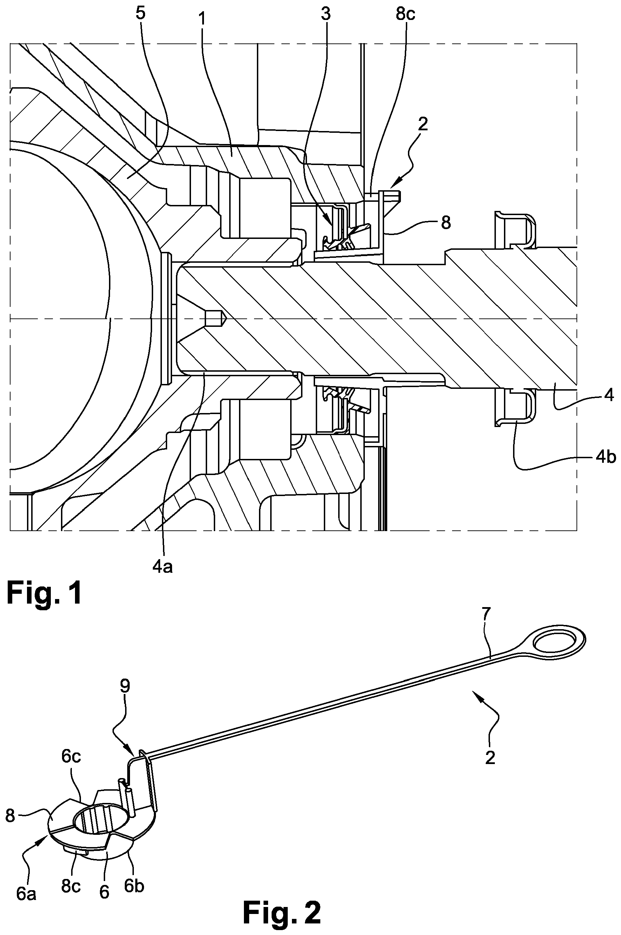

Sur la figure 1, on a représenté, le dispositif protection amovible 2 à l'entrée d'un carter de boîte de vitesses et de différentiel 1. Il protège un joint de transmission, ici un joint à lèvres 3, assurant l'étanchéité entre le carter 1 et l'arbre de transmission 4.

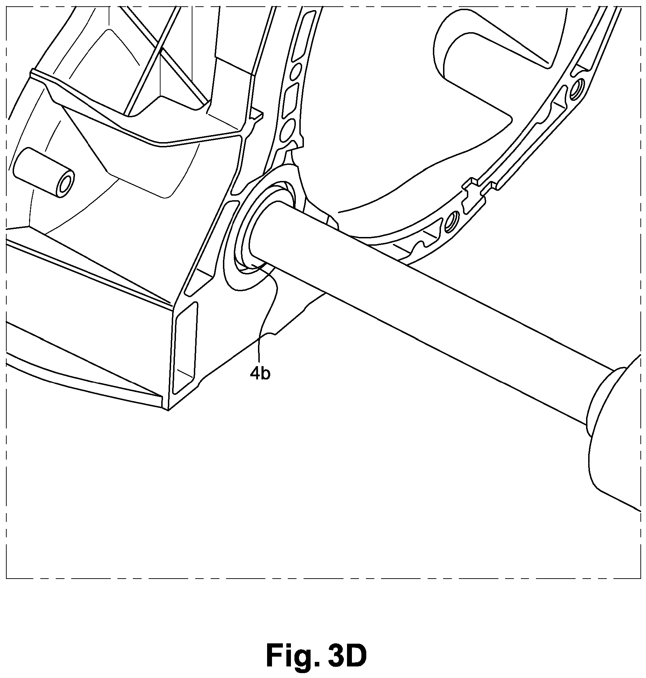

L'arbre 4 présente à son extrémité des cannelures 4a. Sur le schéma, il est partiellement engagé au travers du boîtier de différentiel 5. Ses cannelures 4a ont déjà traversé le dispositif de protection 2, mais il n'a pas encore rejoint sa position définitive d'engagement dans un planétaire creux (non représenté) à l'intérieur du boîtier. L'arbre 4 porte une collerette 4b, qui vient en appui contre le carter 1 en fin de montage (cf. figure 3D). Le dispositif de protection 2, est mis en place à l'ouverture du carter pour protéger le joint, lors du passage des cannelures 4a.

Sur la figure 2, on retrouve le dispositif de protection 2 de la figure 1. Il comprend une couronne de protection cylindrique 6 fendue longitudinalement qui est introduite sous le joint 3 pour le protéger lors de l'emmanchement de l'arbre 4, et un rebord plan 8, d'appui plan annulaire sur le carter, qui est raccordé à la couronne. Le rebord 8 présente une ouverture radiale (non visible sur la figure 2) (ou au moins une zone de faiblesse), dans la continuité de la fente 6a de la couronne. Il peut présenter des ergots 8c, en contact avec la face extérieure du carter 1 en position de montage sur la figure 1. Le dispositif comprend également une poignée d'arrachement 7. La poignée d'arrachement 7 est accrochée à l'extrémité 9a d'une butée 9 s'étendant à partir du rebord 8. Son premier bord 6b, ou bord avant dans le sens de l'introduction, est libre. Son deuxième bord 6c, ou bord arrière, est solidaire du rebord 8. La butée 9 s'avance axialement à partir du rebord annulaire 8 vers l'extérieur du carter 1, pour arrêter l'emmanchement de l'arbre dans une position de référence. La position de référence est atteinte lorsque les cannelures 4a de l'arbre ont dépassé le joint de transmission à protéger 3. L'arbre 4 présente une collerette 4b visible notamment sur la figure 1 à l'écart du carter, et qui est plaquée dans l'ouverture du carter en position de montage (cf. figure 3D). La butée 9 coopère ainsi avec la collerette 4b, pour définir la position de référence. Elle arrête l'arbre en translation, pour indiquer à l'opérateur le moment d'arracher le dispositif de protection.

Le dispositif 2 est constitué de préférence d'une pièce moulée d'un seul tenant, par exemple en matière plastique, comprenant la couronne 6, le rebord plan 8, raccordé au bord arrière de celle-ci, la poignée 7, et la butée 9.

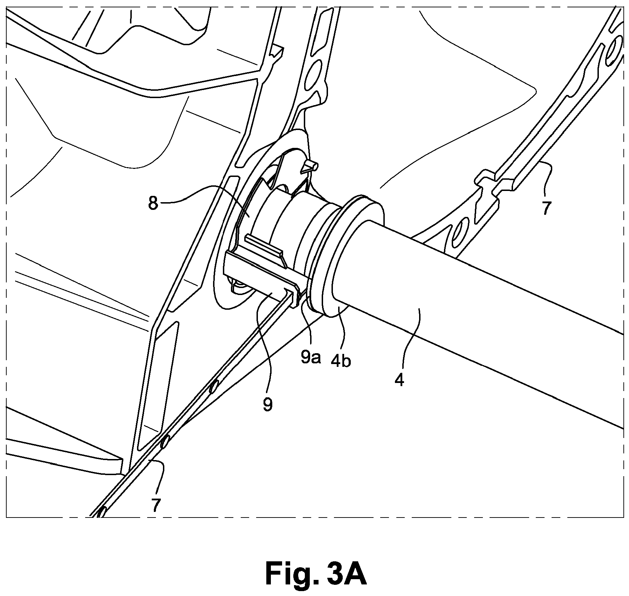

La poignée 7 permet d'arracher le protecteur par rotation, grâce à l'élargissement de la fente 6a de la couronne, et de l'ouverture du rebord 8. Sur la figure 3A, la collerette 4b de l'arbre de transmission 4 a rejoint le bord extérieur 9a de la butée 9 sur lequel est accrochée la poignée 7. C'est le signal pour l'opérateur, que les cannelures 4a de l'arbre ont traversé le dispositif 2, et ne présentent plus de danger pour le joint à lèvres. Il peut alors arracher le dispositif de protection.

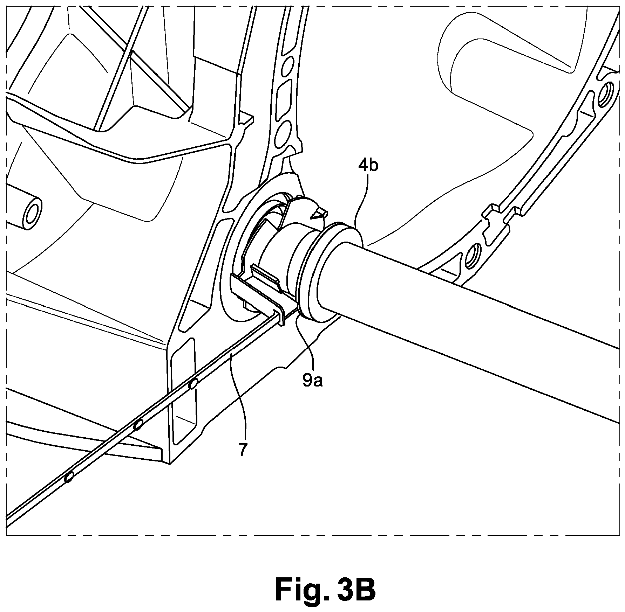

La figure 3B illustre le début de cette opération.

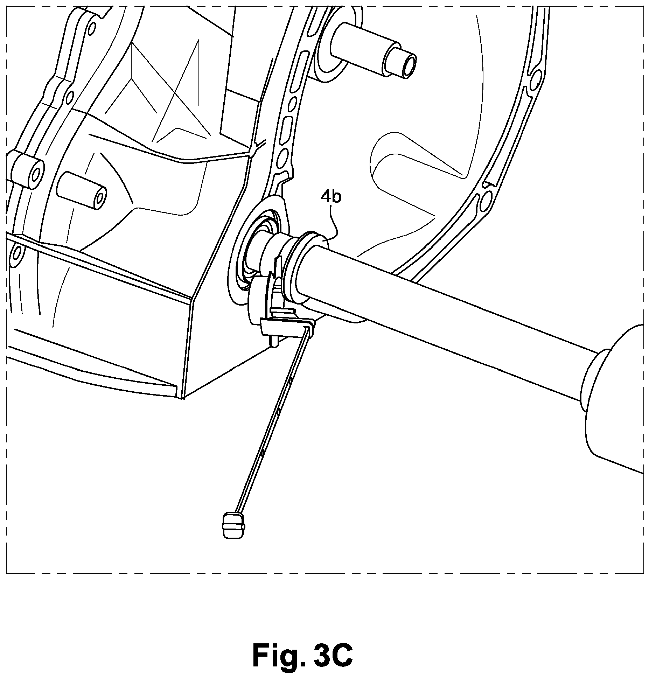

L'opérateur tire sur la poignée 7, de manière à dégager le bord extérieure 9a, de la collerette 4b. En continuant à tirer il fait pivoter le dispositif en prenant appui sur la collerette par la butée. L'ouverture 6a de la couronne se dégage de l'arbre 4, pour rejoindre la position de la figure 3C. Enfin, une fois le dispositif arraché, l'opérateur peut poursuivre l'introduction de l'arbre de transmission sans dégrader le joint, jusqu'à la mise en appui de la collerette 4b contre le carter 1. Dans cette position, l'arbre est complètement engagé dans le différentiel, et peut transmettre son mouvement aux roues du véhicule.

Le procédé de montage d'un arbre de transmission avec un tel dispositif peut ainsi comprendre les étapes principales suivantes :
- mise en place du dispositif sous le joint de transmission,
- emmanchement de l'arbre de transmission jusqu'à une position de référence,
- arrachement du dispositif de protection, en tirant sur la poignée.

Dans ce procédé, la butée du dispositif de protection est dégagée de la collerette 4a en pivotant contre le carter 1, en tirant sur la poignée en direction du carter. Après le dégagement de la butée, le dispositif, est arraché en tirant sur la poignée 7 à l'écart du carter 1.

## Revendications

1. Procédé de montage d'un arbre de transmission s' emmanchant au montage dans un carter de différentiel (1) avec un dispositif de protection (2) amovible de joint de transmission (3) assurant l'étanchéité entre le carter de différentiel (1) et l'arbre de transmission (4), le dispositif de protection (2) comprenant :
- une couronne de protection cylindrique (6) fendue longitudinalement qui est introduite sous le joint de transmission (3) pour le protéger lors de l'emmanchement de l'arbre,
- un rebord plan d'appui plan annulaire (8) sur le carter, raccordé à la couronne (6) et présentant une ouverture radiale faisant suite à la fente de la couronne, et une poignée d'arrachement (7),
- une butée (9) s'avançant axialement vers l'extérieur du carter (1) à partir du rebord plan d'appui plan annulaire (8) sur le carter, pour arrêter l'emmanchement de l'arbre (1) dans une position de référence, la poignée d'arrachement (7) étant accrochée à l'extrémité (9a) de la butée (9), le procédé étant **caractérisé en ce qu'**il comprend les étapes suivantes :
- mise en place du dispositif de protection (2) sous le joint de transmission (3),
- emmanchement de l'arbre de transmission (4) jusqu'à une position de référence, atteinte lorsque une collerette 4b de l'arbre a rejoint le bord extérieur (9a) de la butée,
- arrachement du dispositif de protection (2), en tirant sur la poignée (7), et **en ce que** la butée (9) du dispositif de protection est dégagée de la collerette (4c) par pivotement contre le carter (1) en tirant sur la poignée (7) en direction du carter, le dispositif de protection (2) étant arraché après le dégagement de la butée (9), en tirant sur la poignée (7) à l'écart du carter.

2. Procédé selon la revendication 1, **caractérisé en ce que** la position de référence est atteinte lorsque des cannelures (4a) de l'arbre de transmission ont dépassé le joint de transmission (3).

3. Procédé selon la revendication 2 **caractérisé en ce que** la butée (9) coopère avec une collerette (4b) appartenant à l'arbre de transmission (4).

## Patentansprüche

1. Verfahren zur Montage einer Getriebewelle, die bei der Montage in ein Differentialgehäuse (1) eingeschoben wird, mit einer entfernbaren Schutzvorrichtung (2) für eine Getriebedichtung (3), welche die Dichtigkeit zwischen dem Differentialgehäuse (1) und der Getriebewelle (4) sicherstellt, wobei die Schutzvorrichtung (2) umfasst:
- einen längsgeschlitzten zylindrischen Schutzring (6), welcher unter der Getriebedichtung (3) eingeführt wird, um sie beim Einschieben der Welle zu schützen,
- einen planen Flansch (8), der ringförmig flächig am Gehäuse anliegt, der an den Ring (6) angesetzt ist und eine radiale Öffnung, die sich an den Schlitz des Ringes anschließt, und einen Abzugsgriff (7) aufweist,
- einen Anschlag (9), der von dem planen Flansch (8), der ringförmig flächig am Gehäuse anliegt, axial zur Außenseite des Gehäuses (1) hin vorsteht, um das Einschieben der Welle (1) in einer Referenzposition zu stoppen, wobei der Abzugsgriff (7) am Ende (9a) des Anschlags (9) angehakt ist,
wobei das Verfahren **dadurch gekennzeichnet ist, dass** es die folgenden Schritte umfasst:
- Anbringen der Schutzvorrichtung (2) unter der Getriebedichtung (3),
- Einschieben der Getriebewelle (4) bis zu einer Referenzposition, die erreicht ist, wenn ein Kragen (4b) der Welle am äußeren Rand (9a) des Anschlags zur Anlage gekommen ist,
- Abziehen der Schutzvorrichtung (2) durch Ziehen am Griff (7),
und dadurch, dass der Anschlag (9) der Schutzvorrichtung von dem Kragen (4c) durch Schwenkung gegen das Gehäuse (1) gelöst wird, indem am Griff (7) in Richtung des Gehäuses gezogen wird, wobei die Schutzvorrichtung (2) nach dem Lösen vom Anschlag (9) abgezogen wird, indem am Griff (7) vom Gehäuse weg gezogen wird.

2. Verfahren nach Anspruch 1, **dadurch gekennzeichnet, dass** die Referenzposition erreicht ist, wenn sich die Nuten (4a) der Getriebewelle an der Getriebedichtung (3) vorbeibewegt haben.

3. Verfahren nach Anspruch 2, **dadurch gekennzeichnet, dass** der Anschlag (9) mit einem Kragen (4b) zusammenwirkt, der zur Getriebewelle (4) gehört.

## Claims

1. Method for mounting a transmission shaft inserted into a differential housing (1) during mounting, said differential housing having a removable protection device (2) for a transmission seal (3) providing tightness between the differential housing (1) and the transmission shaft (4), the protection device (2) comprising:
- a longitudinally slotted cylindrical protection ring (6) which is introduced under the transmission seal (3) to protect it during the insertion of the shaft,
- an annular flat bearing flange (8) which flatly bears on the housing, is connected to the ring (6) and has a radial opening following the slot of the ring, and a removal handle (7),
- an abutment (9) projecting axially towards the outside of the housing (1) from the annular flat bearing flange (8) which flatly bears on the housing, in order to arrest the insertion of the shaft (1) in a reference position, the removal handle (7) being attached to the end (9a) of the abutment (9),
the method being **characterized in that** it comprises the following steps:
- placing the protection device (2) under the transmission seal (3),
- inserting the transmission shaft (4) as far as a reference position, which is reached when a collar 4b of the shaft has met the outer edge (9a) of the abutment,
- removing the protection device (2) by pulling on the handle (7), and **in that** the abutment (9) of the protection device is disengaged from the collar (4c) by being pivoted against the housing (1) while pulling on the handle (7) in the direction of the housing, the protection device (2) being removed after the disengagement of the abutment (9) by pulling on the handle (7) away from the housing.

2. Method according to Claim 1, **characterized in that** the reference position is reached when splines (4a) of the transmission shaft have passed beyond the transmission seal (3).

3. Method according to Claim 2, **characterized in that** the abutment (9) cooperates with a collar (4b) belonging to the transmission shaft (4).
